Europäisches Patentamt

European Patent Office

Office européen des brevets

(19)

(11) **EP 0 479 768 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int Cl.[6]: **H04J 3/12**, H04Q 7/20

(21) Anmeldenummer: **91890233.9**

(22) Anmeldetag: **03.10.1991**

(54) **Verfahren zur Verwaltung von Funkkanälen**

Method for administration of radio channels

Méthode pour la gestion de canaux radio

(84) Benannte Vertragsstaaten:
**AT BE CH DE DK ES FR GB GR IT LI LU NL SE**

(30) Priorität: **03.10.1990 AT 1998/90**

(43) Veröffentlichungstag der Anmeldung:
**08.04.1992 Patentblatt 1992/15**

(73) Patentinhaber: **FREQUENTIS NACHRICHTENTECHNIK GESELLSCHAFT m.b.H.**
**A-1123 Wien (AT)**

(72) Erfinder:
• **Bardach, Johannes, Dipl.-Ing.**
**A-1130 Wien (AT)**
• **Pfaffelmayer, Erich, Dipl.Ing.**
**A-2514 Traiskirchen (AT)**

(74) Vertreter: **Wildhack, Helmut, Dipl.-Ing. Dr. et al**
**Patentanwälte Dipl.-Ing. Leo Brauneiss**
**Dipl.-Ing. Dr. Helmut Wildhack**
**Dipl.-Ing. Dr.Gerhard Jellinek**
**Landstrasser Hauptstrasse 50**
**Postfach 281**
**1031 Wien (AT)**

(56) Entgegenhaltungen:
**EP-A- 0 168 647            EP-A- 0 201 126**
**US-A- 4 829 554**

• **XIII INTERNATIONAL SWITCHING SYMPOSIUM 1990 "INNOVATIONS IN SWITCHING TECHNOLOGY" Bd. 6, 28. Mai 1990, STOCKHOLM (SE) Seiten 195 - 198; HENN ET AL.: 'AT &T NEXT GENERATION DIGITAL CELLULAR BASE STATION TECHNOLOGY?**
• **SIEMENS REVIEW. Bd. 44, Nr. 3, 1977, ERLANGEN DE Seiten 125 - 132; GLÜNDER ET AL.: 'Perspectives of Computer-Aided Operation in Long-Haul Communication Networks'**
• **NEC RESEARCH AND DEVELOPMENT, SPECIAL ISSUE ON "C &C OFFICE SYSTEM" 1985, TOKYO JP Seiten 134 - 146; USUKURA ET AL.: 'MAN and WAN'**
• **PATENT ABSTRACTS OF JAPAN vol. 12, no. 168 (E-611)20. Mai 1988 & JP-A-62 279 730**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren gemäß dem Oberbegriff des Anspruches 1.

Aus der EP-A-0168647 ist ein Mobilfunksystem für die Übertragung digitaler Signale zwischen mobilen Teilnehmern und stationären Teilnehmern bekannt, die mit Funktvermittlungsstellen und daran angeschlossenen Feststationen in Verbindung stehen. Damit die Feststationen und die mobilen Teilnehmer mit geringer Sendeleistung betrieben werden können, senden die Feststationen die von den Funkvermittlungsstellen gelieferten Signalkanäle, durch Multiplexen in Signalrahmen zusammengefaßt, aus und besitzen die Feststationen für jeden der von den mobilen Teilnehmern einzeln ausgesendeten Signalkanäle einen eigenen Empfänger.

Betrachtet man den Gegenstand der EP-A-0168647, so erkennt man insbesondere aus Fig. 3 und der zugehörigen Beschreibung, beginnend mit dem letzten Absatz auf Seite 3 und fortgesetzt auf Seite 4, daß die von der Zentrale an die Unterzentrale übertragenen Sprachdaten, Signalisierungsdaten und Femwirkungsdaten nicht bezüglich ihrer Kapazitäten aufgeteilt werden, sondern je nach Bedarf bzw. dem Eintreffen der Signale übermittelt werden. Die Sprachkanäle werden über Multiplexer und Codewandler vom Koppelfeld einem Schlüsselgerät übertragen; die Datenkanäle werden über entsprechende Datenkanäle direkt an das Schlüsselgerät übertragen und die Femwirkdaten werden von der Steuerung über entsprechende Steuerungskanäle direkt dem Multiplexer aufgegeben. Diesbezüglich wird auch auf Seite 4, Zeilen 20 bis 34, der EP-A-0168647 verwiesen. Der Multiplexer überträgt somit die anfallenden Datenkanäle an die an die I/O-Einheit angeschlossene, nicht dargestellte Unterzentrale der Reihe nach, unabhängig von einer allfälligen Priorität bzw. unabhängig von bestimmten, den Sprachkanälen, den Datenkanälen oder Steuerungskanälen zugeordneten Kapazitätswerten. Bei dieser Übermittlung werden bei Anfall von einer Vielzahl von Sprachkanälen die für die Vermittlung und Übertragung der Sprachkanäle notwendigen Datenkanäle und Steuerungskanäle allenfalls nicht in ausreichender Anzahl übermittelt, weil der Multiplexer die Signale nach dem Zeitpunkt ihres Einlangens abarbeitet und nicht auf ein bestimmtes Verhältnis zwischen den einlangenden unterschiedlichen Daten Rücksicht nimmt. Eine Störung eines Datenkanals, z. B. des Steuerungskanals würde somit für eine bestimmte Zeitspanne überhaupt nicht auffallen und die entsprechenden zugeordneten Sprachdaten bzw. Signalisierungsdaten werden weiter übertragen, obwohl sie aufgrund der fehlenden Steuerungskanäle nicht verwertbar sind. Des weiteren sind bei der Einrichtung gemäß der EP-A-0168647 für jeden Sprachkanal, für jeden Datenkanal und für jeden Steuerungskanal entsprechende Übertragungskanäle vorgesehen; eine Einsparung von Übertragungswegen wird lediglich durch das Komprimieren der Sprachkanäle vorgenommen.

Ganz allgemein ist somit aus der EP-A-0168647 ein Verfahren bekannt, gemäß dem bei einem Mobilfunksystem die Sprachdaten bei Ausnutzung der vollen Kapazität des Übertragungsweges so lange übertragen werden, bis die Sprachdaten zur Gänze übertragen sind, wonach erst Signalisierungsdaten, und zwar Signalisierungsdaten, die nicht zwingend der Sprachübertragung, sondern völlig anderen Zwecken dienen, nämlich z. B. zur Abstimmung der Synchronisation oder der Frequenzen usw., übertragen werden. Bei diesem Mobilfunksystem erfolgt somit eine Zuordnung der Kapazität nach Bedarf bzw. in variabler Form. Ein derartiges Mobilfunksystem zeigt nicht die für Flugsicherungsanlagen notwendige Sicherheit, da bei derartigen Mobilfunksystemen in der Praxis die Anfangsbuchstaben bzw. Silben eines Wortes verschluckt werden.

Für die funkgestützte Kommunikation, wie sie etwa bei Flugsicherungsanlagen verwendet wird, werden von einer Zentrale mehrere Funkkanäle verwaltet und die dafür notwendigen Sende- und Empfangsanlagen angesteuert. Die Kommunikationswege zwischen der Zentrale und den Sende- und Empfangsstationen werden durch Telefonleitungen, Koax-Leitungen oder Richtfunkstrecken gebildet. Dabei sind entsprechend dem Stand der Technik pro Funkkanal ein Übertragungsweg für Sprache und Wechselstromtelegrafiekanäle für Femwirksignale zur Steuerung der Sender und Empfänger erforderlich. Da die Zuverlässigkeit solcher Übertragungsleitungen, insbesondere bei der Verwendung von Richtfunkstrecken, nicht besonders groß ist, andererseits die Zuverläsigkeit des Gesamtsystems ein wichtiges Systemmerkmal darstellt, müssen zusätzliche Reserveleitungswege vorgesehen werden, welche einen ausgefallenen regulären Übertragungsweg kurzfristig ersetzen können. Durch die Reservehaltung und die Vielzahl von ständig verfügbar zu haltenden Übertragungswegen sind die Betriebskosten für ein solches Kommunikationssystem sehr hoch.

Eine Verbesserung ergibt sich durch den Einsatz von Unterzentralen, von denen die Sende- und Empfangsstationen dezentral angesteuert werden. Dabei sind wohl für jede Empfangs- und Sendestation lokale Verbindungswege zur Unterstation erforderlich, aber nur relativ kleine Entferungen zu überbrücken. Die Unterzentrale ist wiederum über eine Mehrzahl von parallelen Übertragungswegen mit der Zentrale verbunden. Dadurch werden die Gesamtkosten reduziert, da weit weniger Reservekanäle gebraucht werden. Trotzdem müssen immer noch eine Vielzahl von parallelen Übertragungswegen von der Zentrale zur Unterzentrale ständig verfügbar sein.

Ziel der Erfindung ist es daher, den Aufwand für die ausfallsichere Verbindung der Zentrale zu einer Unterzentrale zu verringern.

Erfindungsgemäß wird dies bei einem Verfahren der eingangs genannten Art durch die im Kennzeichen des Patentanspruches 1 angeführten Merkmale erreicht.

Nachstehend ist die Erfindung unter Bezugnahme auf die Zeichnungen beispielsweise erläutert, es zeigt:

Fig. 1 schematisiert ein Kommunikationssystem;

Fig. 2a, b eine Ausführungsform einer Teilschaltung des Systems nach Fig. 1,

Fig. 3a, b eine andere Ausführungsform der Teilschaltung und

Fig. 4a und Fig. 4b die Kombination der Teilschaltungen nach Fig. 2a, b und Fig. 3a, b.

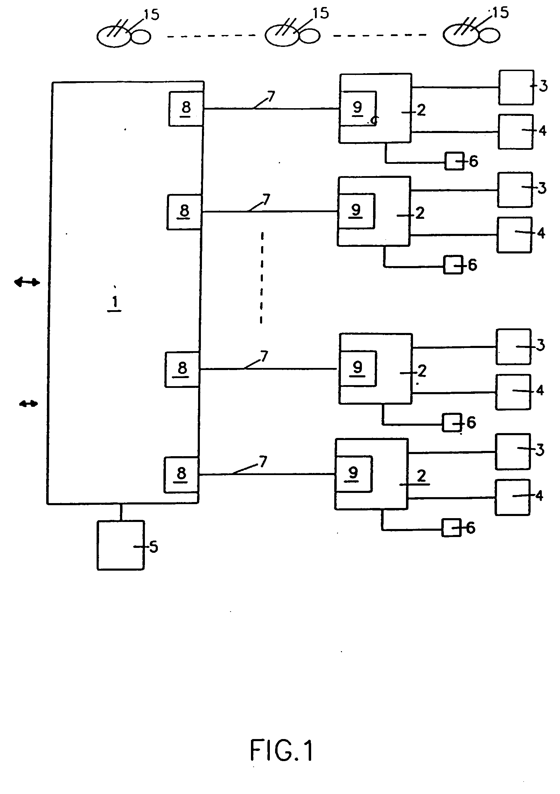

Die Fig. 1 zeigt einen typischen Aufbau eines Kommunikationssystems mit Funkkanälen.

Eine Zentrale 1 erhält in M Funkkanälen zu übertragende Nachrichten über direkt angeschlossene Arbeitsplätze, Vermittlungsanlagen, Telefonverbindungen oder weitere Funkstrecken, wobei außer den Sprachdaten auch zusätzliche Signalisierungsinformationen (Squelch, PTT, AGC, etc.) übertragen werden müssen. Die Sprachdaten und Signalisierungsdaten jedes Funkkanals sollen zu im allgemeinen mobilen Stationen 15, etwa Kommunikationspartnem, wie z. B. Flugzeugen, übertragen werden.

Die Übertragung der Gesamtheit von M Funkkanälen erfolgt nunmehr nicht so, daß jeder Funkkanal über einen eigenen Übertragungsweg durchgehend bis zum Empfänger übertragen wird, sondern daß zwischen der Zentrale und einer Unterzentrale mehrere, nämlich N Funkkanäle über einen gemeinsamen Übertragungsweg an die Unterzentrale 2 im Zeitmultiplexverfahren, pulscodemoduliert übertragen werden. Es sind soviele Unterzentralen 2 vorgesehen als N in M enthalten ist sowie gegebenenfalls noch eine Unterzentrale für den "Divisionsrest". Die Ausgangsdaten der Unterzentrale 2 werden an eine Sendestation 3 übermittelt, wobei über die funkgestützte Kommunikation die Übertragung zu den mobilen Stationen 15 erfolgt.

Jeder Übertragungsweg 7 von der Zentrale zu einer Unterzentrale hat eine Übertragungskapazität X. Beispielsweise beträgt bei einem herkömmlichen digitalen PCM-Übertragungsweg die Übertragungskapazität 64 kbit/sec.

Die lokale Verbindung von der Unterzentrale zu dem Sender 3 wird i.a. durch einen analogen Übertragungsweg im Basisband, wie z.B. eine Telefonleitung, gebildet.

An die Zentrale 1 kann weiters eine Fernwirkzentrale 5 angeschlossen sein, deren Fernwirkinformationen ebenfalls über die Übertragungswege 7 an die jeweiligen Unterzentralen 2 übertragen werden, an die jeweils eine Fernwirk-Unterzentrale 6 angeschlossen ist, in welcher die Fernwirkbefehle ausgewertet werden.

Zur Verwaltung der Übertragungswege 7 zwischen der Zentrale 1 und der Unterzentrale 2 weisen sowohl die Zentrale 1 wie auch jede Unterzentrale 2 je eine Leitungsverwaltungseinheit 8, 9 auf.

Jedem Leitungsverwaltungssystem 8 der Zentrale obliegt die Verwaltung von N-Funkkanälen (Sprachdaten und Signalisierungsdaten) sowie gegebenenfalls auch von Fernwirkdaten. Das Leitungsverwaltungssystem 8 ordnet nun jedem einzelnen der N Funkkanäle jeweils eine Teilübertragungskapazität $TX < \frac{X}{N}$ des Übertragungsweges 7 fest zu. Den Signalisierungsdaten sowie allfällig vorliegenden Fernwirkdaten wird die Restübertragungskapazität RX = X -N.TX fest zugeordnet. Hinsichtlich dieser Zuordnung kann so vorgegangen werden, daß dann, wenn keine Fernwirkdaten vorliegen, den Signalisierungsdaten jedes einzelnen der N Funkkanäle jeweils eine Teilrestübertragungskapazität $TRX = \frac{RX}{N}$ und bei Vorlage von Fernwirkdaten jeweils eine Teilrestübertragungskapazität $TRX < \frac{RX}{N}$ fest zugeordnet wird.

Nachstehend wird ein erfindungsgemäßes Ausführungsbeispiel an Hand eines übertragungsweges beschrieben, für welches gilt.

N = 3

X = 64 kbit/sec

TX < 21,3 nämlich TX = 16 kbit/sec

RX = 64 -3.16 = 16 kbit/sec

TRX = 4 kbit/sec

Die Erfindung ist jedoch auf einen solchen übertragungsweg nicht beschränkt.

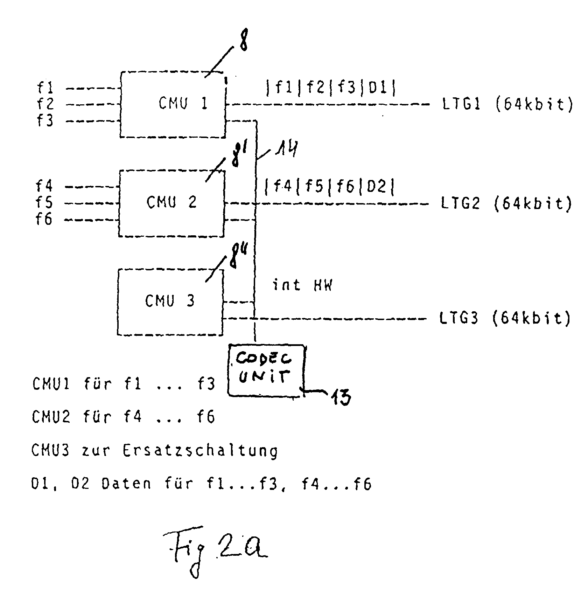

Die Fig.2a zeigt Leitungsverwaltungseinheiten 8, 8', 8" der Zentrale, wobei sich diese Anordnung von jener auf Seiten der Unterzentralen nur dadurch unterscheiden, daß jeweils Eingänge der Leitungsverwaltungsseinheiten 8 der Zentrale Ausgängen der Leitungsverwaltungseinheiten 9 der Unterzentrale 2 entsprechen und Ausgänge der Zentrale Eingängen der Unterzentrale. Da jedoch für jede Verbindung im allgemeinen Duplexbetrieb gefordert ist, müssen entsprechend dem Stand der Technik die Leitungen entweder bidirektional betrieben werden, oder physikalisch aus zwei parallverlaufenden Leitungssträngen mit jeweils Simplexbetrieb bestehen. Dies ist für die Funktion des erfindungsgemäßen Leitungsverwaltungssystems nicht wesentlich und wird daher nicht weiter ausgeführt.

Es wird daher im folgenden auch nur das Leitungsverwaltungssystem 8 der Zentrale näher erläutert.

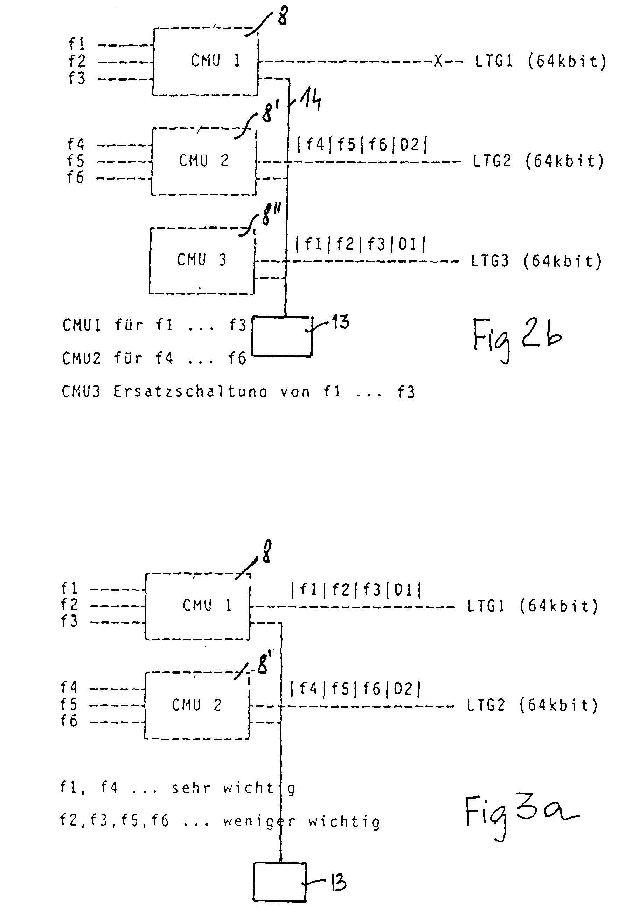

Gemäß Fig. 2 umfaßt die Zentrale beispielsweise drei Leitungsverwaltungseinheiten 8, 8', 8", von welchen jede eine Leitung LTG1, LTG2, LTG3 betreibt. Diese Leitungen entsprechen den übertragungswegen 7 der Fig. 1 und besitzen jeweils eine gesamte Übertragungskapazität 64 kbit/sec.

An den Eingängen der Leitungsverwaltungseinheit 8 liegen die Signale der Funkkanäle f1 bis f3 an, an den Eingängen der Leitungsverwaltungseinheit 8' Signale der Funkkanäle f4 bis f6. Die Leitungsverwaltungseinheit 8″ wird in der beschriebenen Ausführung als Reserveinheit für Ersatzschaltungen verwendet. Die drei Leitungsverwaltungseinheiten sind weiters über einen internen PCM-Kaskadierungs-Highway (14) miteinander verbunden an welchem weiters eine CODEC-Einheit 13 angeschlossen ist.

Im folgenden wird der Normalbetrieb des in Fig.2a dargestellten Systems beschrieben:

Die Sprachdaten des Funkkanals f1 werden von der Leitungsverwaltungseinheit 8 übernommen, digitalisiert und als 64kbit/sec - PCM-Signal über den im Zeitmultiplex betriebenen internen Highway an die CODEC-Einheit 13 übertragen, wo das Sprachsignal nach bekannten Verfahren auf eine Datenrate von 16kbit/sec komprimiert wird. Dieses komprimierte PCM-Sprachsignal des Funkkanals f1 wird über den internen Highway 14 an die Leitungsverwaltungseinheit 8 zurückübertragen und auf der ihr zugeordneten Leitung LTG1 gesendet. Dabei wird durch die im CODEC reduzierte Datenrate von 16 kbit/sec die Übertragungskapazität (64kbit/sec) dieser Leitung nur zu einem Viertel ausgenützt. Dasselbe Verfahren wird für die zwei weiteren an die Leitungsverwaltungseinheit 8 angeschlossenen Funkkanäle f2 und f3 durchgeführt, wodurch 3/1 der Übertragungskapazität der Leitung ausgefüllt werden.

Im letzten Viertel der Übertragungskapazität der 64kbit/sec Leitung werden die Daten (Signalisierung, Steuerungsdaten wie Squelch, Push-to-talk, AGC) für die drei Funkkanäle f1 bis f3 und weitere Fernwirkinformationen in einem Multiplex-Datenkanal D1 übertragen.

Auf der Leitung LTG1 werden daher schließlich 4 Kanäle, nämlich drei Funkkanäle f1,f2,f3 und ein Datenkanal D1 mit je einer Datenrate von 16kbit/sec im Zeitmultiplex pulscodemoduliert übertragen.

In analoger Weise sind an die Leitungsverwaltungseinheit 8' die Funkkanäle f4 bis f6 angeschlossen und werden, gemeinsam mit dem ihnen zugeordneten Datenkanal D2, im Zeitmultiplex über die Leitung LTG2 pulscodemoduliert übertragen.

An die Leitungsverwaltungseinheit 8'' sind im Normalbetrieb keine Funkkanäle angeschlossen; jedoch können verschiedene interne Kommunikationswege, wie z.B. das Diensttelefon über die Leitungsverwaltungseinheit 8'' und die ihr zugeordnete Leitung LTG3 auch unter Berücksichtigung der oben dargelegten Aufteilung der Übertragungskapazitäten abgewickelt werden.

In der Fig.2b wird schematisch dargestellt, wie in weiterer Ausgestaltung der Erfindung der Ausfall einer Leitung, gezeigt ist der Ausfall der Leitung LTG1 durch Ersatzschaltung von Leitungen durchgeführt werden kann.

Sobald die Leitungsverwaltungseinheit 8 mit nach dem Stand der Technik bekannten Verfahren den Ausfall der Leitung LTG1 erkannt hat, wird das ursprünglich für die Leitung LTG1 vorgesehene Zeitmultiplexsignal, bestehend aus den Funkkanälen f1 bis f3 und dem Datenkanal D1, gesteuert von der CODEC-Einheit 13 über den internen Kaskadierungshighway 14 an die Leitungsverwaltungseinheit 8'' übergeben, welche sie über die Ersatzleitung LTG3 überträgt.

Die drei Funkkanäle f4,f5,f6 und der Datenkanal D2 werden wie bisher über die Leitung LTG2 übertragen, die ursprünglich auf der Leitung LTG3 übertragenen zusätzlichen Dienste, wie zB das Diensttelefon, werden zurückgestellt.

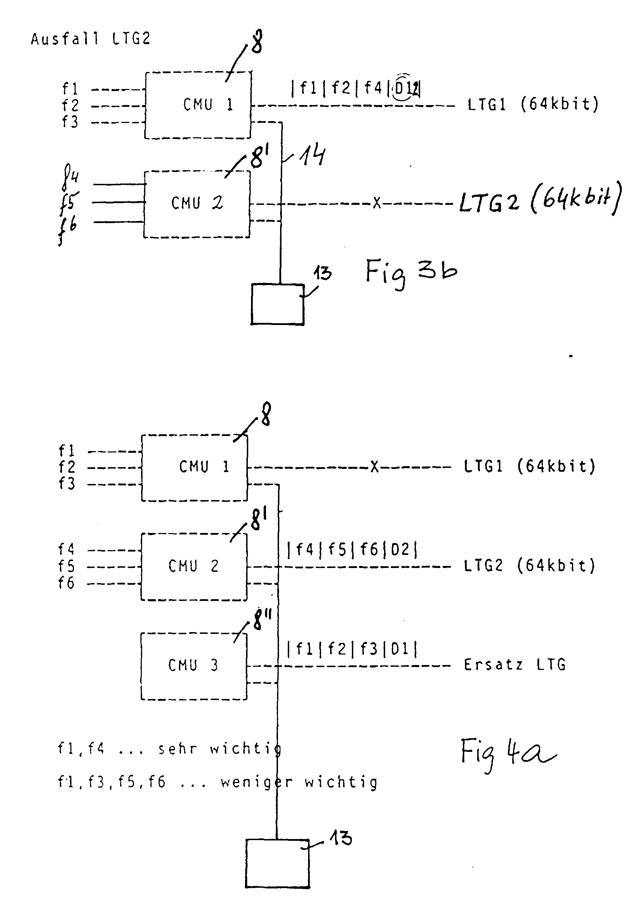

Die Fig.3 zeigt die Verhältnisse bei Leitungsverwaltungseinheiten, wenn den einzelnen Funkkanälen unterschiedliche Priorität zugeordnet werden kann. In der Fig.3a wird ein System zur Übertragung von 6 Funkkanälen über zwei Leitungsverwaltungseinheiten 8, 8' in analoger Weise wie in Fig.2a beschrieben, gezeigt. Es könnten ohne Einschränkungen auch in diesem Fall mehr als zwei Leitungen und Leitungsverwaltungseinheiten vorgesehen sein. Es werden die Funkkanäle f1 bis f3 und der zugeordnete Datenkanal D1 über die Leitung LTG1, die Funkkanäle f4 bis f6 und der Datenkanal D2 über die Leitung LTG2 übertragen. In Abweichung zur Fig.2a stellen hier die Funkkanäle f1 und f4 sehr wichtige Kanäle dar, d.h., daß sie auch im Falle einer Leitungsunterbrechung weiter übertragen werden müssen, die übrigen Funkkanäle f2,f3 und f5,f6 sollen weniger wichtig sein, d.h., sie dürfen bei einer Leitungsstörung eventuell auch ausfallen. In Fig.3b wird schematisch dargestellt, wie nach einem abgewandelten erfindungsgemäßen Verfahren, nämlich der Ersatzschaltung von Kanälen, der Ausfall der Leitung LTG2, kompensiert wird. Es werden dabei die weniger wichtigen Funkkanäle der ungestörten Leitung weggeschaltet und in den dadurch freiwerdenden Schlitzen der Übertragungskapazität die wichtigen Kanäle übertragen. Die Leitungsverwaltungseinheit 8 macht den dritten Kapazitätsschlitz ihrer Leitung LTG1 frei und überträgt statt des ursprünglich vorgesehenen, weniger wichtigen Funkkanals f3 den wichtigen Funkkanal f4, wobei - gesteuert von der CODEC-Einheit - dessen Daten von der Leitungsverwaltungseinheit 8' über den Kaskadierungshighway 14 nunmehr an die Leitungsverwaltungseinheit 8 geliefert werden. Außerdem wird der Datenkanal D1 dahingehend modifiziert, daß anstatt der jetzt nicht mehr benötigten Daten für den Funkkanal f3 die Daten des Funkkanals f4 übertragen werden. Es werden schließlich, trotz Ausfalls der Leitung LTG2 alle wichtigen Funkkanäle (f1 und f4) mit ihren zugehörigen Daten (in D1 und D2) und zusätzlich einer der weniger wichtigen Kanäle (f2) übertragen; damit wird die verbleibende Übertragungskapazität optimal ausgenützt.

Ein besonders vorteilhaftes Verfahren ergibt sich durch die Kombination der beiden vorstehend erwähnten Ersatzschaltungsverfahren.

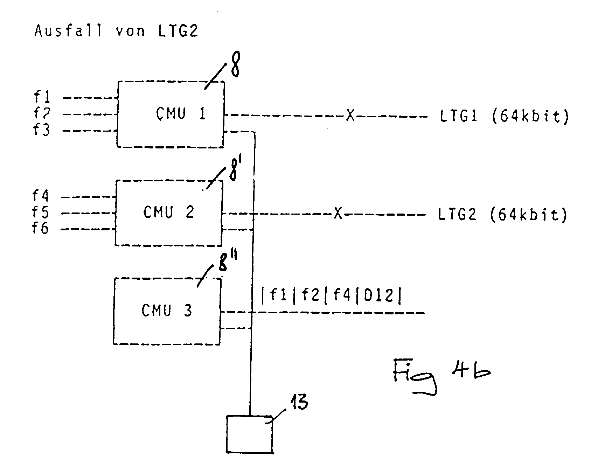

Dies soll anhand eines Beispiels in den Fig.4a und 4b gezeigt werden. Der Normalbetrieb des Systems entspricht jenem der Fig. 2a. Drei Leitungsverwaltungseinheiten 8, 8', 8'' betreiben drei Leitungen LTG1 bis LTG3, wobei den ersten beiden Leitungsverwaltungseinheiten je drei Funkkanäle f1 bis f3 bzw f4 bis f6 zugeordnet sind. Die dritte Leitungsverwaltungseinheit verwaltet die Ersatzleitung LTG3 und überträgt im Normalbetrieb über sie zusätzliche Dienste, wie z.B. Diensttelefon etc.

Es sollen wiederum die Funkkanäle f1 und f4 sehr wichtige Kanäle darstellen, die übrigen Kanäle (f2,f3,f5,f6) sollen weniger wichtig sein. Die Fig.4a zeigt das Verhalten des Systems bei Ausfall einer ersten Leitung, wobei ein Ausfall der Leitung LTG1 angenommen wurde. Da dem System noch eine Reserveleitung (LTG3) zur Verfügung steht, wird das Verfahren der Leitungsersatzschaltung gewählt und die für die Leitung LTG1 vorgesehenen Funkkanäle (f1 bis f3) und Daten (D1) werden gesteuert von der CODEC-Einheit 13 über den Kaskadierungshighway 14 an die Leitungsverwaltungseinheit 8" und weiter über die Ersatzleitung LTG3 übertragen. Fällt nun, bei ausgefallener Leitung LTG1, eine weitere Leitung, z.B. LTG2, aus, so wird, da keine weitere Reserveleitung zur Verfügung steht, das Verfahren der Kanalersatzschaltung gewählt. Der über die Ersatzleitung LTG3 mitübertragene, weniger wichtige Funkkanal f3 wird weggeschaltet und an seiner Stelle der ursprünglich für die, jetzt gestörte, Leitung LTG2 vorgesehene, wichtige Funkanal f4 übertragen. Seine Daten werden in dem modifizierten Datenkanal D12 mitübertragen. Auf diese Weise kann selbst der Ausfall von mehreren Leitungen ohne Ausfall eines wichtigen Funkkanals beherrscht werden.

Die Erfindung wurde vorstehend an Ausführungsbeispielen erläutert, bei welchen jeder Übertragungsweg zwischen Zentrale und Unterzentrale in der erfindungsgemäßen Weise betrieben wurde.

Die Erfindung ist jedoch hierauf nicht beschränkt; so sind auch Ausführungsvarianten denkbar, bei welchen lediglich ein Teil der Übertragungswege oder nur ein einziger dieser Übertragungswege in der erfindungsgemäßen Weise betrieben wird.

## Patentansprüche

1. Verfahren zur Verwaltung von Funkkanälen, bei welchen die Funkkanäle bzw. die in den Funkkanälen übertragenen Sprachdaten und Signalisierungsdaten, insbesondere Squelch-, PTT-, AGC-Signale od.dgl., von einer Zentrale einer Flugsicherungsanlage über einen Übertragungsweg, z.B. Telefonleitungen, Koaxialkabel, Richtfunkstrecken od.dgl., zumindest einer Unterzentrale und von dieser über Sende- bzw. Empfangseinheiten an Flugzeuge, bzw. umgekehrt übermittelt werden, wobei die von den Sende- und Empfangseinheiten abgegebenen bzw. empfangenen Sprachdaten und die Signalisierungsdaten der einzelnen Funkkanäle mit einer der Zentrale und der(n) Unterzentrale(n) zugeordneten Leitungsverwaltungseinheit verwaltet werden, und wobei die Sprachdaten der Funkkanäle vor ihrer Übertragung digitalisiert, pulscodemoduliert und komprimiert werden, dadurch gekennzeichnet, daß bei einer gesamten Übertragungskapazität X des vorzugsweise mehrere Teilübertragungswege umfassenden Übertragungsweges von der Zentrale zu einer Unterzentrale den Sprachdaten jedes einzelnen der über diesen Übertragungsweg zu übertragenden N Funkkanäle jeweils eine Teilübertragungskapazität $TX < \frac{X}{N}$ und den Signalisierungsdaten sowie gegebenenfalls zu übertragenden Femwirkdaten jedes Funkkanals eine Restübertragungskapazität $RX = X - N.TX$ fest zugeordnet wird und daß die komprimierten PCM-Sprachdaten und die zugehörigen Signalisierungsdaten sowie die gegebenenfalls zu übertragenden Femwirkdaten im Zeitmultiplexverfahren über den Übertragungsweg zwischen der Zentrale und der jeweiligen Unterzentrale bzw. umgekehrt übertragen werden.

2. Verfahren nach Anspruch 1, dadurch gekennzeichnet, daß den Signalisierungsdaten und gegebenenfalls zu übertragenden Femwirkdaten jedes einzelnen der N Funkkanäle jeweils eine Teilrestübertragungskapazität $TRX = \frac{RX}{N}$, gegebenenfalls $TRX < \frac{RX}{N}$, fest zugeordnet wird.

3. Verfahren nach Anspruch 1 oder 2, dadurch gekennzeichnet, daß bei einem eine Anzahl von Teilübertragungswegen umfassenden Übertragungsweg bei Störung bzw. Ausfall eines Teilübertragungsweges zwischen der Zentrale und der Unterzentrale die Sprachdaten und deren Signalisierungsdaten und gegebenenfalls zu übertragende Femwirkdaten des ausgefallenen Teilübertragungsweges über einen vorhandenen, insbesondere gleiche Übertragungskapazität besitzenden Ersatz-Teilübertragungsweg zwischen der Zentrale und der Unterzentrale übertragen werden.

4. Verfahren nach einem der Ansprüche 1 bis 3, dadurch gekennzeichnet, daß bei einem eine Anzahl von Teilübertragungswegen umfassenden Übertragungsweg bei Störung bzw. Ausfall eines Teilübertragungsweges Sprachdaten und deren Signalisierungsdaten und gegebenenfalls zu übertragende Femwirkdaten in einem anderen, ungestörten Teilübertragungsweg ab- bzw. weggeschaltet werden und die dadurch freiwerdende Übertragungskapazität für die Übertragung der Sprachdaten und Signalisierungsdaten und gegebenenfalls Femwirkdaten eines bzw. mehrerer ausgewählten(r), bislang auf dem gestörten bzw. ausgefallenen Teilübertragungsweg übertragenen(r) Funkkanales (kanäle) zur Verfügung gestellt werden.

## Claims

1. A method for the administration of radio channels, in which the radio channels or the speech data and signalling data, more particularly squelch, PTT, AGC signals or the like, transmitted in the radio channels are sent from a control centre of an air traffic control system via a transmission path, for instance telephone lines, coaxial cables, radio relay links or the like, to at least one dependent control centre and from there via transmitting and receiving units to aeroplanes, or vice versa, wherein the speech data and signalling data of the individual radio channels, transmitted or received by the transmitting and receiving units, are administered with a line administration unit assigned to the control centre and dependent control centre(s), and wherein the speech data of the radio channels are digitalised, pulse-code modulated and compressed before their transmission, characterized in that in the case of a total transmission capacity of X of the transmission path preferably comprising several partial transmission paths from the control centre to a dependent control centre, a partial transmission capacity $TX < \frac{X}{N}$ is fixedly assigned to the speech data of each individual one of the N radio channels to be transmitted via this transmission path, and a residual transmission capacity $RX = X - N.TX$ is fixedly assigned to the signalling data and, if appropriate, to remote control data to be transmitted of each radio channel, and in that the compressed PCM speech data and the associated signalling data and also, if appropriate, the remote control data to be transmitted are transmitted by the time-division multiplex method via the transmission path between the control centre and the particular dependent control centre or vice versa.

2. A method according to claim 1, characterized in that a partial residual transmission capacity $TRX = \frac{RX}{N}$, if appropriate $TRX < \frac{RX}{N}$, is fixedly assigned to the signalling data and, if appropriate, to remote control data to be transmitted of each individual one of the N radio channels.

3. A method according to claim 1 or 2, characterized in that with a transmission path comprising a number of partial transmission paths, in the event of a fault on or failure of a partial transmission path between the control centre and the dependent control centre, the speech data and the signalling data thereof and, if appropriate, remote control data to be transmitted of the failed partial transmission path are transmitted via an alternative partial transmission path between the control centre and the dependent control centre which is available and which more particularly has the same transmission capacity.

4. A method according to one of claims 1 to 3, characterized in that with a transmission path comprising a number of partial transmission paths, in the event of a fault on or failure of a partial transmission path, speech data and the signalling data thereof and, if appropriate, remote control data to be transmitted in another fault-free transmission path are disconnected or switched away, and the transmission capacity thereby released for transmitting the speech data and signalling data and, if appropriate, remote control data of one or more selected radio channel(s) previously transmitted on the faulty or failed partial transmission path is made available.

**Revendications**

1. Méthode pour la gestion de canaux radio dans laquelle les canaux radio ou les données de phonie et les données de signalisation transmises par ces canaux radio, en particulier les signaux de squelch, APP (appuyer pour parler), CAV (commande de volume), ou autres, sont transmis d'une station centrale d'un centre de sécurité aérienne, par une voie de transmission, par exemple des lignes téléphoniques, un câble coaxial, des faisceaux hertziens ou similaires, à une station satellite au moins, et de celle-ci, par des unités d'émission /réception, à des avions, ou vice versa, les données de phonie et de signalisation émises ou reçues sur les différents canaux radio étant gérées par une unité de gestion de ligne affectée à la station centrale et à la - ou aux - station(s) satellite(s), les données de phonie des canaux radio subissant, avant leur transmission, un traitement de numérisation, de modulation par impulsions codées et de compression, <u>caractérisée</u> en ce que, pour une capacité totale de transmission X de la voie de transmission constituée de préférence par plusieurs voies élémentaires de transmission, allant de la station centrale à une station satellite, il est affecté de façon fixe aux données de phonie de chacun des N canaux radio à transmettre sur cette voie de transmission, une capacité élémentaire de transmission fixe TX < X/N et aux données de signalisation ainsi qu'aux données éventuelles de télécommande à transmettre pour chaque canal radio, une capacité résiduelle de transmission RX = X - (N × TX) et en ce que les données comprimées en mode PCM (modulation par impulsions codées), ainsi que les données de signalisation correspondantes et les données éventuelles de télécommande à transmettre, sont transmises par multiplexage temporel sur la voie de transmission entre la station centrale et la station satellite correspondante, ou vice versa.

2. Méthode selon la revendication 1, caractérisée en ce qu'il est attribué aux données de signalisation et aux données éventuelles de télécommande à transmettre pour chacun des N canaux radio une capacité élémentaire résiduelle de transmission fixe TRX = RX/N, le cas échéant TRX < RX/N.

3. Méthode selon l'une ou l'autre des revendications 1 et 2, caractérisée en ce que dans une voie de transmission comportant plusieurs voies élémentaires de transmission, en cas de défaut ou d'indisponibilité de l'une des voies élémentaires de transmission entre la station centrale et la station satellite, les données de phonie ainsi que leurs données de signalisation et le cas échéant les données de télécommande à transmettre sur la voie élémentaire de transmission en défaut sont transférées sur une voie élémentaire de transmission de remplacement disponible, en particulier avec la même capacité de transmission, entre la station centrale et la station satellite.

4. Méthode selon l'une quelconque des revendications 1 à 3, caractérisée en ce que dans une voie de transmission comportant plusieurs voies élémentaires de transmission, en cas de défaut ou d'indisponibilité de l'une des voies élémentaires de transmission, les données de phonie ainsi que leurs données de signalisation et le cas échéant les données de télécommande à transmettre sont soit commutées sur une autre voie élémentaire de transmission non perturbée, soit supprimées, la capacité de transmission ainsi libérée étant affectée à la transmission des données de phonie ainsi que des données de signalisation et le cas échéant des données de télécommande d'un ou de plusieurs canaux radio sélectionnés qui étaient auparavant transmis sur la voie de transmission actuellement indisponible ou en défaut.

FIG.1

EP 0 479 768 B1

CMU1 für f1 ... f3

CMU2 für f4 ... f6

CMU3 zur Ersatzschaltung

D1, D2 Daten für f1...f3, f4...f6

Fig 2a

9

f1 ———
f2 ——— CMU 1 8 ————————————————— X—— LTG1 (64kbit)
f3 ———

14

f4 ——— 8'
f5 ——— CMU 2 |f4|f5|f6|D2| ————— LTG2 (64kbit)
f6 ———

8''
CMU 3 |f1|f2|f3|D1| ————— LTG3 (64kbit)

CMU1 für f1 ... f3        13        Fig 2b

CMU2 für f4 ... f6

CMU3 Ersatzschaltung von f1 ... f3

f1 ———
f2 ——— CMU 1 8 |f1|f2|f3|D1| ——— LTG1 (64kbit)
f3 ———

8'
f4 ———
f5 ——— CMU 2 |f4|f5|f6|D2| ——— LTG2 (64kbit)
f6 ———

f1, f4 ... sehr wichtig

f2,f3,f5,f6 ... weniger wichtig        Fig 3a

13

10

Ausfall LTG2

f1 —————
f2 —————        CMU 1        |f1|f2|f4|D1|  ————— LTG1 (64kbit)
f3 —————

f4 —————
f5 —————        CMU 2        —————X————— LTG2 (64kbit)
f6 —————

Fig 3b

f1 —————
f2 —————        CMU 1        —————X————— LTG1 (64kbit)
f3 —————

f4 —————
f5 —————        CMU 2        |f4|f5|f6|D2|  ————— LTG2 (64kbit)
f6 —————

                CMU 3        |f1|f2|f3|D1|  ————— Ersatz LTG

f1,f4 ... sehr wichtig

f1,f3,f5,f6 ... weniger wichtig

Fig 4a

Ausfall von LTG2

Fig 4b